Europäisches Patentamt

European Patent Office

Office européen des brevets

(11) Numéro de publication : **0 018 913**
**B1**

(12) # FASCICULE DE BREVET EUROPÉEN

(45) Date de publication du fascicule du brevet :
15.12.82

(51) Int. Cl.³ : **F 16 D 55/224**

(21) Numéro de dépôt : 80400594.0

(22) Date de dépôt : 29.04.80

(54) Frein à disque.

(30) Priorité : 07.05.79 FR 7911516

(43) Date de publication de la demande :
12.11.80 (Bulletin 80/23)

(45) Mention de la délivrance du brevet :
15.12.82 Bulletin 82/50

(84) Etats contractants désignés :
DE GB IT

(56) Documents cités :
FR A 1 451 940
FR A 2 196 040
FR A 2 290 607
FR A 2 373 720
GB A 2 028 940
US A 3 889 785

(73) Titulaire : **SOCIETE ANONYME AUTOMOBILES CITROEN**
**117 à 167, Quai André Citroën**
**F-75747 Paris Cedex 15 (FR)**

**AUTOMOBILES PEUGEOT**
**75, avenue de la Grande Armée**
**F-75116 Paris (FR)**

(72) Inventeur : **Papagni, Robert Pantaleone**
**17, rue de Versailles**
**F-78470 St. Remy-les-Chevreuse (FR)**

(74) Mandataire : **Michardière, Bernard et al**
**Cabinet Plasseraud 84, rue d'Amsterdam**
**F-75009 Paris (FR)**

Frein à disque

L'invention est relative aux freins à disque, du genre de ceux qui comprennent :

— un disque rotatif lié à une partie tournante à freiner ;

— un support non rotatif comportant deux bras disposés d'un côté du disque et portant deux éléments de guidage, tels que des broches, situés au voisinage de la périphérie du disque, espacés circonférentiellement et s'étendant parallèlement à l'axe du disque ;

— deux éléments de friction disposés de part et d'autre du disque et montés coulissants sur les éléments de guidage ;

— un étrier à deux branches qui chevauchent le disque, l'une des branches d'une part portant un dispositif de serrage du frein, propre à appliquer un premier élément de friction contre le disque et d'autre part étant montée coulissante sur les éléments de guidage, tandis que l'autre branche de l'étrier, par réaction d'appui, déplace vers le disque le second élément de friction avec lequel elle est assujettie dans le sens radial et dans le sens circonférentiel par un organe de liaison, l'ensemble étant tel que les efforts de réaction de freinage sont encaissés par les éléments de guidage, tels que des broches.

L'invention concerne plus particulièrement les freins à disque pour véhicules automobiles.

Le brevet FR-A-1 451 940 montre un frein à disque de ce genre. Les éléments de guidage ont un encombrement réduit de telle sorte que la ventilation du disque et des éléments de friction, dans la région de ces éléments de guidage, est assurée dans des conditions relativement bonnes. Toutefois, ces éléments de guidage, qui doivent encaisser les efforts de réaction de freinage, sont fixés solidement sur le support sans possibilité de démontage. Il en résulte de sérieuses difficultés lorsqu'on veut vérifier l'état d'usure des éléments de friction, ou lorsque l'on veut changer ces éléments de friction ; pratiquement, un démontage du disque doit être effectué, ce qui nécessite un temps d'intervention relativement long.

On connaît par ailleurs, notamment d'après le brevet FR-A-2 196 040, des freins à disque comportant des éléments de guidage amovibles des plaquettes. Toutefois, ces éléments de guidage ne sont pas soumis aux efforts de réaction de freinage ; ces efforts sont encaissés par des bras qui s'étendent au-dessus de la périphérie du disque et qui sont solidaires du support fixe. On comprend immédiatement que la présence de ces bras, au-dessus de la périphérie du disque, est un obstacle à la ventilation et au refroidissement en cette région.

Le remplacement des éléments de friction s'effectue d'une manière relativement simple grâce à la possibilité de démontage des éléments de guidage.

L'invention a pour but, surtout, de rendre les freins à disque du genre défini précédemment tels qu'ils ne présentent plus ou présentent à un degré moindre, les inconvénients rappelés ci-dessus et notamment tels qu'ils permettent d'accéder plus facilement aux éléments de friction en vue de leur vérification et/ou de leur changement, tout en assurant un guidage satisfaisant desdits éléments de friction et de l'étrier, lors du fonctionnement du frein et une bonne ventilation dans la région des éléments de guidage.

Selon l'invention, un frein à disque du genre défini précédemment est caractérisé par le fait qu'un des éléments de guidage est monté amovible sur le support, que ce support est muni de moyens de centrage de cet élément de guidage et, qu'enfin, des moyens sont prévus pour soulager des moyens de guidage vis-à-vis des efforts de réaction de freinage.

Ainsi, le démontage des éléments de friction se trouve facilité grâce à l'amovibilité de l'élément de guidage, sans qu'il en résulte une diminution des capacités d'absorption des efforts de réaction de freinage par cet élément de guidage amovible.

Selon une première possibilité, les moyens pour soulager l'élément de guidage des efforts de freinage comprennent le montage dudit élément de guidage dans une position telle qu'il est situé le premier, par rapport à l'autre élément de guidage, suivant le sens normal de rotation du disque (marche avant dans le cas d'un véhicule automobile).

Selon une autre possibilité, qui peut se combiner avec la précédente, les moyens pour soulager l'élément de guidage amovible, contre les efforts de réaction de freinage, comprennent des moyens de soutien dudit élément de guidage, prévus sur le support, qui coopèrent avec une région de l'élément de guidage située vers l'extérieur dans le sens circonférentiel, cette région s'étendant suivant une direction parallèle à l'axe de l'élément de guidage, notamment au moins jusqu'au plan du disque.

Les éléments de guidage sont généralement formés par des broches cylindriques et les moyens de centrage sont formés par un alésage prévue dans une surépaisseur formant bossage à l'extrémité d'un des bras du support.

De préférence, chaque élément de friction comprend une plaquette, support de garniture de friction, qui prend appui par une oreille concave ouverte, sensiblement en demi-cercle, contre la surface située vers l'intérieur, dans le sens circonférentiel, de chaque broche ; les moyens de soulagement sont alors formés par un prolongement du support suivant une direction parallèle à l'axe du disque, comportant une cavité, à section sensiblement semi-circulaire, située du côté opposé à la zone d'appui de l'oreille de la plaquette.

La broche formant élément de guidage amovible, comprend, avantageusement, une partie filetée vissée dans un trou taraudé du support et se prolonge, du côté du support opposé au disque, par une partie lisse cylindrique servant de guidage à l'étrier.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1 de ces dessins, est une vue, en élévation d'un frein à disque conforme à l'invention, la partie supérieure étant représentée en coupe et la partie inférieure étant représentée en extérieur.

La figure 2 est une coupe suivant II-II figure 1.

La figure 3, enfin, est une vue en plan avec partie arrachée, de l'étrier.

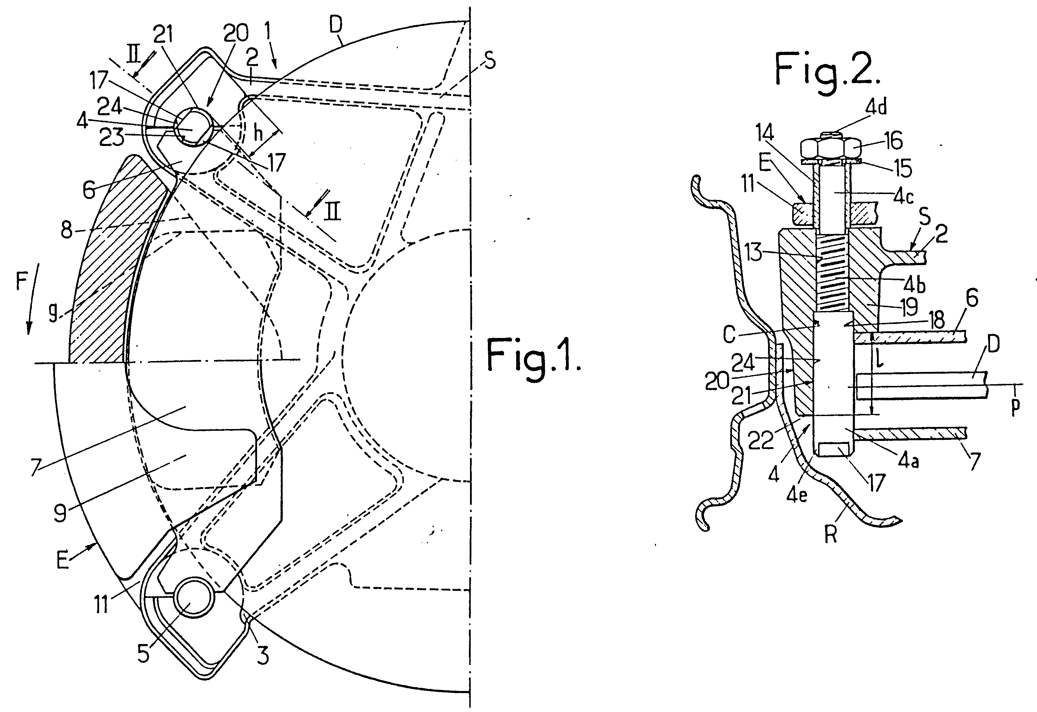

En se reportant aux dessins, notamment à la figure 1, on peut voir un frein à disque 1 qui comporte un disque rotatif D lié à une partie tournante à freiner, par exemple une roue R d'un véhicule automobile. Ce frein comporte, également, un support S non rotatif bloqué sur une partie fixe du véhicule, par exemple une fusée de roue ; ce support S comporte deux bras 2, 3 disposés d'un côté du disque et portant deux éléments de guidage formés par des broches cylindriques 4, 5. Ces broches s'étendent suivant une direction parallèle à l'axe du disque D comme visible sur la figure 2. Les broches 4 et 5 sont espacées circonférentiellement et sont situées au voisinage de la périphérie du disque D comme visible sur la figure 1.

Deux éléments de friction comportant chacun une plaquette 6, 7 et une garniture de friction telle que g fixée sur la plaquette, sont disposés de part et d'autre du disque D et sont montés coulissants sur les broches 4 et 5.

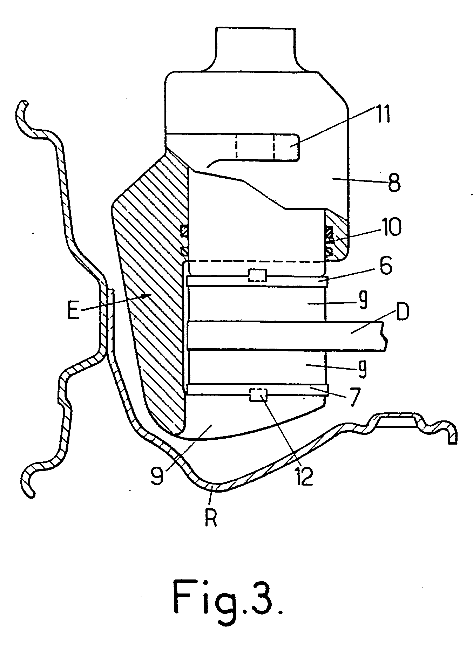

Le frein 1 comprend, en outre, un étrier E à deux branches 8, 9 qui chevauchent le disque ; la branche 8 (fig. 3) porte un dispositif hydraulique de serrage 10 du frein, propre à appliquer un premier élément de friction (6, g) contre le disque D ; l'autre branche 9 de l'étrier, par réaction d'appui, déplace le second élément de friction (7, g) vers le disque.

L'étrier E peut coulisser sur les broches 4 et 5 ; pour cela la branche 8 comporte deux extensions telles que 11 (fig. 2 et 3) engagées autour des broches 4 et 5, comme montré sur la figure 2, de manière à pouvoir coulisser tout en étant guidées par ces encoches.

La branche 9 est assujettie, dans le sens radial et dans le sens circonférentiel, par un organe de liaison 12 avec la plaquette 7 de l'élément de friction (7, g). Le sens normal de rotation du disque D c'est-à-dire, dans le cas d'un véhicule automobile, le sens de rotation du disque D pour la marche avant a été représenté par la flèche F sur la figure 1.

La broche 5, située en deuxième position, suivant le sens de cette flèche F, est emmanchée dur (par exemple par différence de température) dans un alésage du bras 3 du support. Cette broche 5 ne peut être démontée.

Par contre, la broche 4 située la première dans le sens de la flèche F est montée amovible à l'extrémité du bras 2 du support S.

La broche 4 comporte une partie 4a cylindrique, lisse servant d'élément de guidage proprement dit pour les plaquettes 6 et 7 ; la partie lisse 4a est prolongée par une partie filetée 4b destinée à être vissée dans un trou taraudé 13 du support 2. Ce trou 13 traverse complètement le support et la broche 4 fait saillie, du côté du bras 2 opposé au disque D, par une partie 4c, cylindrique, de plus petit diamètre que la partie 4a. Cette partie 4c est destinée à servir de guidage à l'extension ou branche 11 de l'étrier E. Avantageusement, la partie 4c est entourée d'une douille 14 en matière plastique à faible coefficient de frottement, notamment en polytétrafluoréthylène ; l'extension 11 est engagée autour de cette douille 14 qui facilite le coulissement.

L'extrémité 4d de la partie 4c est filetée ; la douille 14 est arrêtée par une rondelle 15 engagée autour de la partie 4d et par un écrou 16 vissé sur cette partie filetée.

L'extrémité 4e de la broche 4, opposée à 4d, comporte deux zones plates 17 (fig. 1 et 2) diamétralement opposées, pour permettre de saisir la broche 4 avec une clé en vue du démontage.

La broche 5, emmanchée dur dans l'alésage du bras 3, ne comporte pas de partie filetée semblable à la partie 4b de la broche 4 ; toutefois, cette broche 5 se prolonge également, du côté du bras 3 opposé au disque D de manière à servir de guidage à l'autre extension 11 de l'étrier E.

Le support S est muni de moyens de centrage C (fig. 2) de la broche 4 ; ces moyens de centrage C sont formés par un alésage 18 ménagé dans une surépaisseur 19 prévue à l'extrémité du bras 2.

Des moyens sont, en outre, prévus pour soulager la broche 4 des efforts de réaction de freinage. En effet, lorsque le dispositif de serrage hydraulique applique les éléments de friction (6, g) et (7, g) contre les deux faces du disque, les efforts de réaction de freinage sont encaissés par les broches 4 et 5.

Selon une première possibilité, les moyens pour soulager la broche 4 de ces efforts de réaction de freinage, comprennent le montage de ladite broche 4 dans une position telle qu'elle se trouve située la première, par rapport à l'autre broche 5, suivant le sens normal de rotation (flèche F) du disque D ; dans le cas d'un véhicule automobile, il s'agit du sens de rotation en marche avant.

On comprend ainsi, notamment dans le cas d'un véhicule automobile, que les efforts de réaction de freinage les plus importants, qui se produisent dans le cas de la marche avant (vitesse élevée à réduire brusquement) sont transmis essentiellement à la broche 5 emmanchée dur sur le bras 3. La broche 4 sera soumise à des efforts moins importants.

Selon une autre possibilité, qui peut être utilisée, de préférence, en combinaison, ou, le cas échéant, indépendamment de la possibilité évoquée précédemment, les moyens pour soulager la broche 4 des efforts de réaction de freinage comprennent des moyens de soutien 20 (fig. 1 et 2) de cette broche 4, prévus sur le support S. Ces moyens de soutien 20 coopèrent avec une région 21 de la broche 4 située vers l'extérieur dans le sens circonférentiel.

Les moyens de soutien 20 sont formés par un prolongement suivant une direction parallèle à l'axe de la broche 4 de la surépaisseur 19, formant bossage, à l'extrémité du bras 2. La dimension moyenne $h$ (fig. 1) suivant le sens circonférentiel du prolongement 20 est suffisante pour donner à ce prolongement une résistance mécanique appropriée aux efforts auxquels il est soumis.

Le prolongement 20 s'étend sur une longueur $l$ (fig. 2) suivant une direction parallèle à l'axe de la broche 4, suffisante pour que l'extrémité 22 de ce prolongement se trouve au moins dans le plan moyen $p$ du disque D et, de préférence, comme représenté sur la figure 2, du côté de ce plan $p$ opposé au bras 2.

Les plaquettes 6 et 7 des éléments de friction prennent appui contre la broche amovible 4, et également contre la broche 5, par des oreilles telles que 23 concaves ouvertes sensiblement en demi-cercle ; chaque oreille s'appuie contre la surface intérieure, dans le sens circonférentiel, de la broche 4 ou 5, c'est-à-dire contre la surface de cette broche tournée vers l'espace compris entre les broches 4 et 5.

Le prolongement 20 présente alors une cavité 24 à section sensiblement semi-circulaire sensiblement diamétralement opposée à l'oreille 23, cavité contre laquelle vient en appui la surface extérieure dans le sens circonférentiel de la broche 4.

Le démontage des éléments de friction 6g, 7g, en vue de leur vérification et/ou de leur changement s'effectue de la manière suivante.

On dévisse l'écrou 16 de l'extrémité 4d de la broche 4. Puis on dévisse, à l'aide d'une clé coopérant avec les zones plates 17, la broche 4 du trou taraudé 13 du bras 2 de manière à extraire cette broche.

On libère ainsi une extension 11 de l'étrier E ; on fait alors pivoter cet étrier E et les éléments de friction autour de la broche 5.

On peut, ensuite, grâce aux oreilles ouvertes 23, dégager chaque élément de friction de l'étrier E pour l'extraire complètement du frein.

Pour le montage, on effectue les opérations inverses.

Le frein conforme à l'invention permet donc un accès facile aux éléments de friction, sans perdre de son efficacité en fonctionnement.

### Revendications

1. Frein à disque comprenant :
— un disque rotatif (D) lié à une partie tournante à freiner ;
— un support (S) non rotatif comportant deux bras (2, 3) disposés d'un côté du disque et portant deux éléments de guidage (4, 5), tels que des broches, situés au voisinage de la périphérie du disque, espacés circonférentiellement et s'étendant parallèlement à l'axe du disque ;
— deux éléments de friction (6, 7 ; g) disposés de part et d'autre du disque et montés coulissants sur les éléments de guidage (4, 5) ;
— un étrier (E) à deux branches (8, 9) qui chevauchent le disque, l'une des branches (8) d'une part portant un dispositif de serrage (10) du frein, propre à appliquer un premier élément de friction (6, g) contre le disque et d'autre part étant montée coulissante sur les éléments de guidage (4, 5), tandis que l'autre branche (9) de l'étrier, par réaction d'appui, déplace vers le disque le second élément de friction (7, g) avec lequel elle est assujettie dans le sens radial et dans le sens circonférentiel par un organe de liaison (12), l'ensemble étant tel que les efforts de réaction de freinage sont encaissés par les éléments de guidage, tels que des broches (4, 5), caractérisé par le fait qu'un des éléments de guidage (4) est monté amovible sur le support (S), que ce support est muni de moyens de centrage (C) de cet élément de guidage et, qu'enfin, des moyens sont prévus pour soulager cet élément de guidage vis-à-vis des efforts de réaction de freinage.

2. Frein à disque, selon la revendication 1, caractérisé par le fait que les moyens pour soulager l'élément de guidage (4) des efforts de freinage comprennent le montage dudit élément de guidage (4) dans une position telle qu'il est situé le premier, par rapport à l'autre élément de guidage, suivant le sens normal (F) de rotation du disque.

3. Frein à disque selon la revendication 2, pour véhicule automobile, caractérisé par le fait que l'élément de guidage (4) monté amovible est situé le premier suivant le sens de rotation du disque en marche avant.

4. Frein à disque selon l'une quelconque des revendications précédentes, caractérisé par le fait que les moyens pour soulager l'élément de guidage amovible, contre les efforts de réaction de freinage, comprennent des moyens de soutien (20) dudit élément de guidage (4), prévus sur le support (S), qui coopèrent avec une région (21) de l'élément de guidage située vers l'extérieur dans le sens circonférentiel, cette région (21) s'étendant suivant une direction parallèle à l'axe de l'élément de guidage, notamment au moins jusqu'au plan du disque.

5. Frein à disque selon la revendication 4, dans lequel les éléments de guidage sont formés par des broches cylindriques (4, 5), caractérisé par le fait que les moyens de centrage (C) sont formés par un alésage (18) prévu dans une surépaisseur (19) formant bossage à l'extrémité d'un des bras (2) du support.

6. Frein à disque selon la revendication 5, dans lequel chaque élément de friction comprend une plaquette (6, 7), support de garniture de friction (g), caractérisé par le fait que la plaquette (6, 7) prend appui par une oreille concave ouverte (23), sensiblement en demi-cercle, contre la surface

situé vers l'intérieur dans le sens circonférentiel, de chaque broche (4, 5).

7. Frein à disque, selon la revendication 6, caractérisé par le fait que les moyens de soulagement sont formés par un prolongement (20) du support suivant une direction parallèle à l'axe du disque, comportant une cavité (24), à section sensiblement semi-circulaire, située du côté opposé à la zone d'appui de l'oreille (23) de la plaquette.

8. Frein à disque, selon l'une quelconque des revendications précédentes caractérisé par le fait que la broche formant élément de guidage amovible (4) comprend une partie filetée (4b) vissée dans un trou du support et se prolonge, du côté du support opposé au disque, par une partie lisse cylindrique (4c) servant de guidage à l'étrier.

9. Frein à disque, selon la revendication 8, caractérisé par le fait que la partie lisse cylindrique (4c) de la broche servant de guidage à l'étrier est entourée d'une douille (14) en matière plastique à faible coefficient de frottement, notamment en polytétrafluoréthylène.

**Claims**

1. A disc brake comprising
— a rotary disc (D) fastened to a rotary portion to be braked ;
— a non-rotary bracket (S) comprising two arms (2, 3) located on one side of disc and supporting two guiding elements (4, 5), such as pins, located near the disc periphery, spaced along the circumference and extending parallel to the disc axis ;
— two friction elements (6, 7 ; g) located on both sides of the disc and slidably mounted on the guiding elements (4, 5) ;
— a yoke (E) having two branches (8, 9) which overlap the disc, one of the branches (8) on the one side supporting a device (10) for actuation of the brake, said device being adapted to press a first friction element (6, g) against the disc, and, on the other side, being slidably mounted on the guiding elements (4, 5), while the other yoke branch (9), due to abutting reaction, shifts towards disc the second friction element (7, g), to which said branch is fastened against movement in the radial direction and in the circumferential direction by a fastening member (12), the whole being such that the braking reaction forces are supported by said guiding elements, such as pins (4, 5), characterized in that one (4) of said guiding elements is removably mounted on the bracket (S), said bracket is provided with means (C) for centring said guiding element and means are provided for relieving that guiding element from braking reaction forces.

2. A disc brake according to claim 1, characterized in that the means for relieving the guiding element (4) from braking reaction forces comprise mounting said guiding element (4) in such a position that it is located first, along the normal rotational direction (F) of the disc, with respect to the other guiding element.

3. A disc brake according to claim 2, for a motor car, characterized in that said removably mounted guiding element (4) is located first in the rotational direction of disc corresponding to forward running.

4. A disc brake according to any one of the preceding claims, characterized in that the means for relieving the removable guiding element from braking reaction forces comprise means (20) for supporting said guiding element (4), said supporting means (20) being provided on the bracket (S) and cooperating with a portion (21) of said guiding element located outwardly in the circumferential direction, said portion (21) extending along a direction parallel to the guiding element axis, especially at least up to disc plane.

5. A disc brake according to claim 4 in which the guiding elements are cylindrical pins (4, 5), characterized in that the centring means (C) are formed by a bore (18) provided in a bulge (19) forming a projection at one end of one of the bracket arms (2).

6. A disc brake according to claim 5 in which each friction element comprises a plate (6, 7), supporting a friction pad (g), characterized in that the plate (6, 7) bears against an area of each pin (4, 5) located inwardly in circumferential direction, through a substantially semi-circular open concave portion (23).

7. A disc brake according to claim 6 characterized in that the relieving means are formed by a bracket extension (20) in a direction parallel to the disc axis, said extension having a recess of substantially semi-circular cross section, opposite to the bearing area of the concave portion of the plate (23).

8. A disc brake according to any one of preceding claims, characterized in that the pin forming removable guiding element (4) comprises a threaded portion (4b) screwed in a bracket bore and extends up to the bracket side opposite to disc with a smooth cylindrical portion (4c) for guiding the yoke.

9. A disc brake according to claim 8, characterized in that said smooth cylindrical portion (4c) used for guiding the yoke is coated with a sleeve (14) of low friction plastics material, especially of polytetrafluorethylene.

**Ansprüche**

1. Scheibenbremse, die
— eine mit einem zu bremsenden rotierenden Teil verbundene Drehscheibe (D) aufweist, sowie
— ein nicht drehbares Gestell (S) mit zwei an einer Seite der Scheibe angebrachten Armen (2, 3), die zwei Führungsglieder (4, 5) tragen, z.B. Bolzen, die sich in der Nähe des Scheibenumfangs mit Zwischenräumen im Kreisumfang befinden und sich parallel zur Scheibenwelle erstrecken ;

— zwei beidseitig der Scheibe und auf die Führungsglieder (4, 5) gleitend angeordnete Bremsbacken (6, 7 ; g) ;

— einen Bügel (E) mit zwei Schenkel (8, 9), die auf die Scheibe übergreifen, wobei einer der Schenkel (8) eine Festpressvorrichtung (10) der Bremse trägt, die dazu bestimmt ist, eine erste Bremsbacke (6, g) der Scheibe entgegenzuhalten und verschiebbar auf den Führungsgliedern (4, 5) angeordnet ist, während der andere Schenkel (9) des Bügels durch Reaktionskraft die zweite Bremsbacke (7, g) der Scheibe zu verschiebt, womit die Bremsbacke in radialer Richtung und in Richtung des Umfangs durch ein Verbindungsorgan (12) verbunden ist, wobei die Bremsreaktionskräfte von den Führungsgliedern aufgenommen werden, wie z.B. den Bolzen (4, 5), dadurch gekennzeichnet, dass eines der Führungsglieder (4) abnehmbar auf das Gestell (S) montiert ist, dass dieses Gestell mit Zentrierungsmitteln (C) dieses Führungsgliedes versehen ist, und, dass Mittel zur Unterstützung dieses Führungsgliedes gegenüber der Bremsreaktionskraft vorgesehen sind.

2. Scheibenbremse nach Anspruch 1, dadurch gekennzeichnet, dass durch die Mittel zur Unterstützung des Führungsgliedes (4) gegenüber der Bremsreaktionskraft, dieses Führungsglied so montiert ist, dass es als erstes im Vergleich zum anderen Führungsglied in normaler Drehrichtung (F) der Scheibe angeordnet ist.

3. Scheibenbremse nach Anspruch 2 für Automobilfahrzeuge, dadurch gekennzeichnet, dass das beweglich angeordnete Führungsglied (4) als erstes in Drehrichtung der Scheibe nach vorne angeordnet ist.

4. Scheibenbremse nach einem der vorgenannten Ansprüche, dadurch gekennzeichnet, dass die Mittel zur Unterstützung des verschiebbaren Führungsgliedes gegenüber der Bremsreaktionskraft Unterstützungsmittel (20) des genannten Führungsgliedes (4) aufweisen, die auf dem Gestell (S) angeordnet sind und die mit dem Bereich (21) des Führungsgliedes zusammenwirken, der sich am Äusseren in Umfangsrichtung befindet, wobei sich dieser Bereich (21) in paralleler Richtung zur Führungsgliedachse erstreckt, zumindest bis zur Scheibenebene.

5. Scheibenbremse nach Anspruch 4, in welcher die Führungsglieder durch zylindrische Bolzen (4, 5) gebildet werden, dadurch gekennzeichnet, dass die Zentrierungsmittel (C) durch eine Bohrung (18) gebildet werden, die sich in einer Dicke (19) befindet, welche an einem Armende (2) des Gestells einen Vorsprung bildet.

6. Scheibenbremse nach Anspruch 5, in welcher jede Bremsbacke eine Platte (6, 7), Träger des Bremsbelages (g) aufweist, dadurch gekennzeichnet, dass sich die Platte (6, 7) durch ein offenes, konkaves, vorwiegend im Halbkreis angeordnetes Ohr (23) an die sich im Inneren in Umfangsrichtung jedes Bolzens (4, 5) befindliche Fläche stützt.

7. Scheibenbremse nach Anspruch 6, dadurch gekennzeichnet, dass die Unterstützungsmittel durch einen Fortsatz (20) des Gestells in Parallelrichtung zur Scheibenrichtung gebildet werden, wobei die Bremsscheibe einen Hohlraum (24) mit vorwiegend halbkreisförmigem Abschnitt aufweist, der der Stützzone des Ohrs (23) der Platte gegenüberliegt.

8. Scheibenbremse nach einem der vorgenannten Ansprüche, dadurch gekennzeichnet, dass der das abnehmbare Führungsglied (4) bildende Bolzen einen Gewindeteil (4b) aufweist, der in einen Bohrung des Gestells geschraubt ist und sich auf der der Scheibe gegenüberliegenden Gestellseite durch einen glatten zylindrischen Teil (4c) verlängert, der zur Führung des Bügels dient.

9. Scheibenbremse nach Anspruch 8, dadurch gekennzeichnet, dass der glatte, zylindrische Teil (4c) des Bolzens, der zur Führung des Bügels dient, mit einer Büchse (14) aus Kunststoff mit schwachem Reibungskoeffizient, vorzugsweise Polyetrafluorethylen, umgeben ist.

Fig.2.

Fig.1.

Fig.3.